(19) Europäisches Patentamt

European Patent Office

Office européen des brevets

(11) EP 2 404 421 B1

(12) **EUROPEAN PATENT SPECIFICATION**

(45) Date of publication and mention
of the grant of the patent:
**10.05.2017 Bulletin 2017/19**

(21) Application number: **10748326.5**

(22) Date of filing: **02.03.2010**

(51) Int Cl.:
*H04L 5/00* (2006.01)          *H04W 72/08* (2009.01)

(86) International application number:
**PCT/CN2010/070822**

(87) International publication number:
**WO 2010/099736 (10.09.2010 Gazette 2010/36)**

(54) **METHOD AND APPARATUS FOR BROADCASTING AND RECEIVING SYSTEM INFORMATION IN OFDMA SYSTEMS**

VERFAHREN UND VORRICHTUNG ZUM RUNDSENDEN UND EMPFANGEN VON SYSTEMINFORMATIONEN IN OFDMA-SYSTEMEN

PROCÉDÉ ET APPAREIL DE DIFFUSION ET DE RÉCEPTION D'INFORMATIONS DE SYSTÈME DANS DES SYSTÈMES OFDMA

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **02.03.2009 US 156576 P**
             **24.04.2009 US 172326 P**
             **26.02.2010 US 660440**

(43) Date of publication of application:
**11.01.2012 Bulletin 2012/02**

(73) Proprietor: **MediaTek Inc.**
**Hsin-Chu 300 (TW)**

(72) Inventors:
• **CHEN, Yih-Shen**
**Hsinchu 300**
**Taiwan (TW)**

• **LIAO, Pei-Kai**
**NantouCounty**
**Taiwan 551 (TW)**
• **LIN, Chih-Yuan**
**Yilan County**
**Taiwan 268 (TW)**

(74) Representative: **2K Patentanwälte Blasberg Kewitz & Reichel**
**Partnerschaft mbB**
**Schumannstrasse 27**
**60325 Frankfurt am Main (DE)**

(56) References cited:
**WO-A1-2008/154768      CN-A- 1 981 498**
**CN-A- 101 103 605       US-A1- 2002 041 635**
**US-A1- 2004 131 007     US-A1- 2004 233 838**
**US-A1- 2008 008 256     US-A1- 2008 107 192**
**US-A1- 2008 240 314**

**Description**

**CROSS REFERENCE TO RELATED APPILCATIONS**

This application claims priority under 35 U.S.C. §119 from U.S. Provisional Application Number 61/156,576, entitled "OFDMA System," filed on March 2, 2009; U.S. Provisional Application Number 61/172,326, entitled "Receiver Architecture for OFDMA Network with FR=1," filed on April 24, 2009.

**BACKGROUND OF THE INVENTION**

**Field of the Invention**

The disclosed embodiments relate generally to wireless network communications, and, more particularly, to broadcast channel design in wireless orthogonal frequency division multiple access (OFDMA) communication systems.

**Description of the Related Art**

In cellular orthogonal frequency division multiple access (OFDMA) communication systems, each base station broadcasts a set of essential system information such as cell identification information, network entry/reentry information, sleep mode operation parameters, and other broadcasting announcement to mobile stations. The set of system information is conveyed by a common broadcast channel (BCH), also referred as superframe header (SFH) in the IEEE 802.16m specification. Typically, a mobile station has access to the system information after performing downlink (DL) synchronization with its serving base station.

There are two different options available for SFH broadcasting. In a first option of SFH broadcasting with cell planning, each base station broadcasts the SFH information using different frequency subcarriers among neighboring base stations. For example, frequency reuse three is applied for SFH transmission such that there is no SFH interference coming from three neighboring cells. In a second option of SFH broadcasting without cell planning, frequency reuse one is applied for SFH transmission and the; SFH information is transmitted over the same frequency subcarriers among cells. While SFH broadcasting with cell planning eliminates SFH interference from other cells, cell planning requires large maintenance and operation cost and has low deployment flexibility. On the other hand, while SFH without cell planning suffers undesirable inter-cell interference, it provides easy and flexible system deployment.

In OFDMA systems, interference is typically caused by collision between pilot tones and data tones transmitted over the same radio resource blocks. In general, the collision of pilot tones is more server than that of data tones. This is because the collision of pilot tones results in poor channel estimation and thus degrades the decoding performance of data tones. Therefore, if the issue of pilot tone collision is effectively resolved, then SFH without cell planning will be a preferable choice with improved system performance.

WO 2008 154 768 A relates to method and device for pilot mapping in multiplexing mode of unicast and broadcast/multicast services and include following steps: generate different pilot symbol for unicast services and broadcast/multicast services, respectively; mapping the pilot symbols for the MBMS service to multiple transmit antennas such that, in a subframe, the pilot symbols for the MBMS service for each antenna are arranged in a same time domain and adjacent to each other, the pilot symbols for the MBMS service for the same transmit antenna are spaced from each other by a predetermined number of subcarriers in the frequency domain and by a predetermined number of OFDM symbols in the time domain, and the pilot symbols for the MBMS service for the same transmit antenna are arranged in a staggered form along the time domain, and mapping the pilot symbols for the unicast service at the same time.

US 2004 233 838 A relates to OFDM communication method and device. When OFDM signals are transmitted from a plurality of antennas, a pilot carrier is transmitted from one antenna among the plurality of antennas, and a null signal is transmitted from an antenna other than that antenna by a subcarrier of the frequency band that transmits the pilot carrier.

US 2002 041 635 A relates to relates to preamble design for MIMO-OFDM system. One or more preambles are inserted into frames of Orthogonal Frequency Multiplexing (OFDM)-Multiple Input, Multiple Output (MIMO) signals. The preamble is received by the antennas of a receiver decoded and compared to known values to provide synchronization, framing, channels estimation, offsets and other corrections to the transmitted signal.

US 2004 131 007 A relates to pilot transmission schemes suitable for use in wireless multicarrier (e.g., OFDM) communication systems. These pilot transmission schemes may utilize frequency, time, or both frequency and time orthogonality to achieve orthogonality among the pilots transmitted by multiple base stations on the downlink. Frequency orthogonality is achieved by transmitting pilots on disjoint sets of subbands. Time orthogonality is achieved by transmitting pilots using different orthogonal codes (e.g., Walsh codes). The pilots may also be scrambled with different scrambling codes, which are used to randomize pilot interference and to enable identification of the transmitters of these pilots. Pilot interference cancellation may be performed to improve performance since subbands used for data transmission by one transmitter may also be used for pilot transmission by another transmitter. Pilot interference is estimated and then subtracted from received symbols to obtain pilot-canceled symbols having improved quality.

US 2008 / 0008256 A discloses an OFDM transmitting apparatus capable of preventing any degradation of the throughput of the communication system without assigning any resources of the communication system for transmission of a control channel. In the apparatus, a switch selectively supplies, based on the encoded data of the control channel outputted from an encoding part, a plurality of outputs from a repetition part to pattern generating parts. In this way, a plurality of types of repetition patterns can be used to generate outbound data. An assigning part maps the outbound data generated by one of the pattern generating parts to a subcarrier.

BRIEF SUMMARY OF THE INVENTION

A method for broadcasting system information via a broadcast channel (BCH) in an OFDMA system is provided. The BCH comprises one or more two-dimensional resource blocks. Each resource block has an array of subcarriers along frequency domain and an array of OFDM symbols along time domain. A plurality of pilot tones and a plurality of data tones are positioned within each resource block. The pilot tones are used to facilitate channel estimation, while the data tones are used to carry the actual content of system information.

In one embodiment, the plurality of pilot tones are located in configurable positions such that pilot tones of the same resource blocks transmitted by different base stations in the OFDMA system are interlaced to reduce inter-cell pilot-to-pilot collision. The selection of pilot patterns can be a function of cell identification (cell ID) information. In one example, each cell positions its pilot tones in interlaced locations of the same resource block based on its cell ID. By having interlaced pilot patterns for adjacent cells, channel estimation quality in each cell is much improved because of reduced interference on pilot tones. In addition, power boosting for pilot tones can further improve channel estimation quality.

In another embodiment, data tones that are located in pilot positions of other adjacent cells are nullified so that they are no longer available for data transmission. By nullifying data tones located in pilot positions of other adjacent cells, interference on pilot tones due to inter-cell data-to-pilot collision is reduced, and channel estimation quality is improved.

In yet another embodiment, system information is repeated in frequency domain or time domain or both to improve detection reliability. Different 2D repetition patterns are communicated to the mobile stations. In one embodiment, system information is mapped into a first information bit stream and a second information bit stream. The first information bit stream indicates a 2D repetition pattern, while the second information bit stream carriers the actual content of system information. Upon receiving the broadcasted system information, the mobile stations decode the first information bit stream and derive the 2D repetition pattern, and then decode the second information bit stream and retrieve the content of system information according to the 2D repetition pattern. In one preferred embodiment, the 2D repetition pattern is represented by modulation and coding (MCS) information.

In one novel aspect, the property of interlaced pilot patterns is leveraged to estimate second-order statistics of dominant interfering sources, which facilitates receiver implementation and improves receiver performance. In one embodiment, a mobile station receives a composite radio signal composed of a first radio signal and a plurality of interfering radio signals. The first radio signal is transmitted by its serving base station using a first pilot pattern. The plurality of radio signals are transmitted by a plurality of interfering base stations using a plurality of corresponding pilot patterns. The first pilot pattern and the plurality of pilot patterns are predefined and interlaced. The mobile station estimates a first channel response of the serving BS based on the first pilot pattern. The mobile station also estimates a plurality of channel responses of the plurality of the interfering BSs based on the plurality of corresponding pilot patterns. By using different pilot patterns to estimate different channel responses from different base stations, the overall performance of channel estimation is improved. In order to achieve optimal receiver performance, the mobile station estimates second-order statistics of remaining interfering sources based on the interlaced pilot patterns if tone nullification is also applied on the transmitter side.

Other embodiments and advantages are described in the detailed description below. This summary does not purport to define the invention. The invention is defined by the claims.

BRIEF DESCRIPTION OF DRAWINGS

The accompanying drawings, where like numerals indicate like components, illustrate embodiments of the invention.

Figure 1 illustrates a broadcast channel (BCH) in a wireless OFDMA system in accordance with one novel aspect.
Figure 2 is a flow chart of a method of broadcasting system information in accordance with one novel aspect.

Figure 3 illustrates one example of interlaced pilot pattern in broadcasting system information.

Figure 4 illustrates one example of null-tone based interlaced pilot pattern in broadcasting system information.

Figure 5 illustrates one example of pilot power boosting in broadcasting system information.

Figure 6 illustrates different examples of 2D repetition in broadcasting system information.

Figure 7 illustrates a wireless OFDMA system in accordance with one novel aspect.

Figure 8 illustrates a simplified block diagram of a receiver with interlaced pilot pattern exploitation for channel estimation and compensation.

Figure 9 is a flow chart of a method of channel estimation and compensation in accordance with a novel aspect.

## DETAILED DESCRIPTION OF THE INVENTION

Reference will now be made in detail to some embodiments of the invention, examples of which are illustrated in the accompanying drawings.

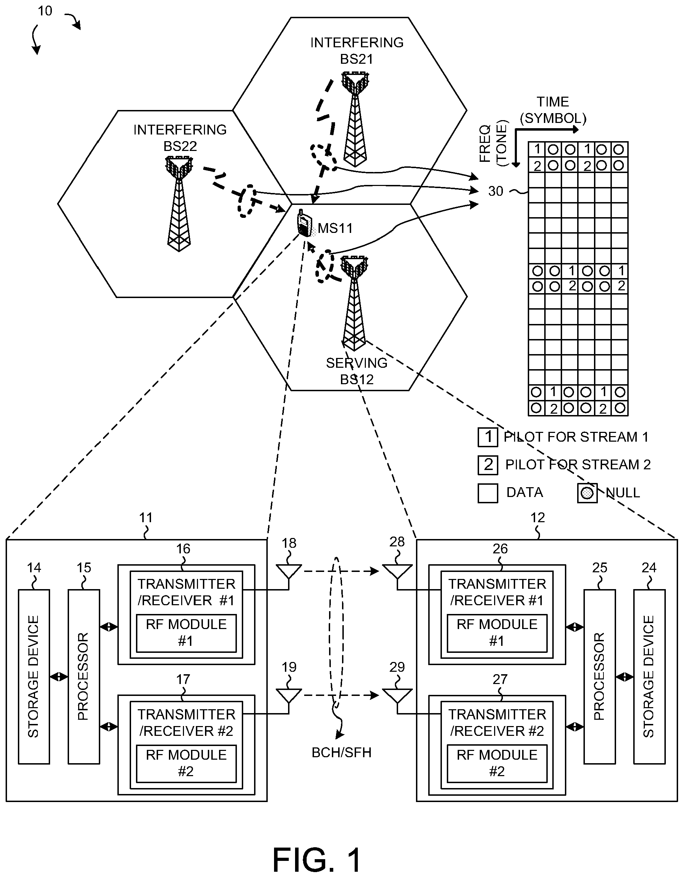

Figure 1 illustrates a broadcast channel (BCH) in a wireless OFDMA system 10 in accordance with one novel aspect. Wireless OFDMA system 10 comprises a mobile station MS11, a serving base station BS12, and two interfering base stations BS21 and BS22. MS11 comprises a storage device 14, a processor 15, a first transmitter and receiver 16 coupled to a first antenna 18, and a second transmitter and receiver 17 coupled to a second antenna 19. Similarly, BS12 comprises a storage device 24, a processor 25, a first transmitter and receiver 26 coupled to a first antenna 28, and a second transmitter and receiver 27 coupled to a second antenna 29. In wireless OFDMA system 10, each base station BS12, BS21 and BS22 broadcasts a set of essential system information such as cell identification information, network entry/reentry information, sleep mode operation parameters, and other broadcasting announcement to all mobile stations located in wireless OFDMA system 10. The set of system information are conveyed by a common broadcast channel (BCH), also referred as superframe header (SFH) in the IEEE 802.16m specification.

As illustrated in Figure 1, the BCH comprises one or more two-dimensional radio resource blocks to broadcast the SFH information. Each resource block (for example, resource block 30) comprising a number of consecutive subcarriers (also referred as frequency tones) along frequency domain and a number of consecutive OFDM symbols (also referred as time slots) along time domain. The SFH information may be broadcasted either with or without cell planning. In advanced wireless systems such as cdmaOne, WCDMA, CDMA2000, and IEEE 802.16m, SFH transmission without cell planning is adopted to reduce large maintenance and operation cost and to increase deployment flexibility. When the SFH information is broadcasted without cell planning, however, frequency reuse one (FR=1) is applied for each base station and thus introduces undesirable inter-cell interference among different base stations. This is because under frequency reuse one, the SFH information is transmitted via a common BCH over the same physical radio resource spectrum. In the example of Figure 1, BS12, BS21, and BS22 all use the same resource block 30 to broadcast system information. Thus, MS11 not only receives radio signals carrying system information broadcasted from its serving base station BS12, it also receives interfering radio signals carrying system information broadcasted from interfering base stations BS21 and BS22. Moreover, in a multi-cell environment, such inter-cell interference becomes worse when MS11 moves toward the cell boundary.

As illustrated in Figure 1, resource block 30 comprises a plurality of pilot tones and a plurality of data tones. The pilot tones are used to facilitate channel estimation, while the data tones are used to carry the actual system information. Typically, inter-cell interference is caused by collision between both pilot tones and data tones. When pilot tones are affected by other pilot and data tones, the performance of channel estimation deteriorates. When data tones are affected by other pilot tones, the performance of data decoding rate deteriorates. In general, the collision of pilot tones is more server than that of data tones because the collision of pilot tones results in poor channel estimation and thus degrades the decoding performance of data tones. In one novel aspect, the BCH in OFDMA system 10 is designed for broadcasting system information in such a way that inter-cell interference is reduced.

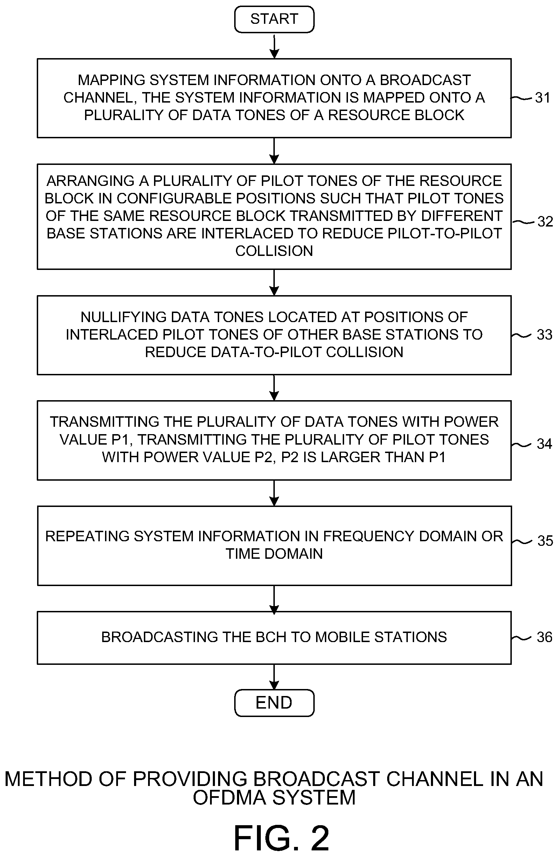

Figure 2 is a flow chart of a method of broadcasting a common broadcast channel (BCH) in wireless OFDMA systems in accordance with one novel aspect. In step 31, each base station its system information onto one or more resource blocks of the BCH. Each resource block comprises a plurality of pilot tones and a plurality of data tones. The plurality of pilot tones is positioned in configurable locations in each resource block such that pilot tones of the same resource block transmitted by different base stations are interlaced to reduce pilot-to-pilot collision (step 32). In addition, data tones located at positions of all interlaced pilot patterns are optionally nullified to reduce data-to-pilot collision (step 33). In step 34, the transmitting power values of the pilot tones and the data tones are optionally adjusted to further improve the performance of channel estimation. In addition, the system information is optionally repeated in either frequency domain or time domain or both to improve the performance of data decoding rate (step 35). Finally, each base station broadcasts the common BCH to mobile stations (step 36). Different examples and embodiments of different schemes and options of the BCH broadcasting method are now described below with more details.

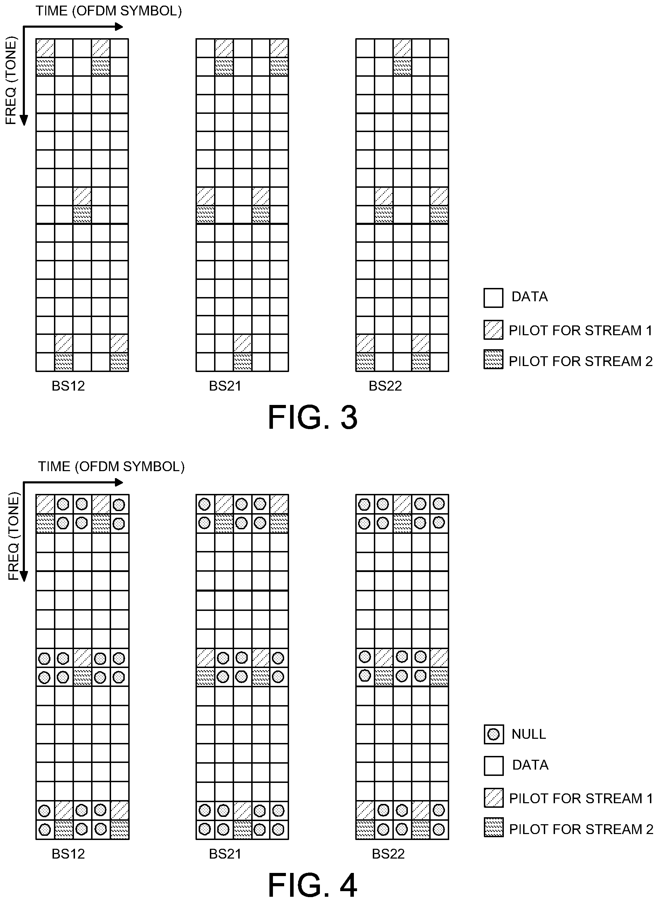

Figure 3 illustrates one example of interlaced pilot pattern for broadcasting system information via resource block 30 in wireless OFDMA system 10. In the example of Figure 3, pilot tones of resource block 30 transmitted by three adjacent cells BS12, BS21, and BS22 are interlaced such that their pilot tones do not collide with each other. More specifically, each base station transmits its system information over the same resource block 30 with three different pilot patterns to reduce inter-cell pilot-to-pilot collision. The selection of pilot patterns can be a function of cell identification information. In one example, each cell positions its pilot tones in interlaced locations in resource block 30 based on its cell ID. In another example, in a three-segment deployment, each segment broadcasts its system information with a different pilot pattern in resource block 30. By having interlaced pilot patterns for adjacent cells, channel estimation quality in each cell is much improved than non-interlaced pilot pattern scenario.

Figure 4 illustrates one example of null-tone based interlaced pilot pattern for broadcasting system information via resource block 30 in wireless OFDMA system 10. While interlaced pilot pattern reduces inter-cell pilot-to-pilot collision, it does not reduce inter-cell data-to-pilot collision. In the example of Figure 4, data tones of one cell (i.e., BS12) that are located in pilot positions of other adjacent cells (i.e., BS21 and BS22) are nullified so that they are no longer available for data transmission. By nullifying data tones located in interlaced pilot tones for other adjacent cells, interference on pilot tones due to inter-cell data-to-pilot collision is reduced, and channel estimation quality is further improved. Because of improved channel estimation quality, higher MCS can be applied and the capacity of BCH is effectively enlarged.

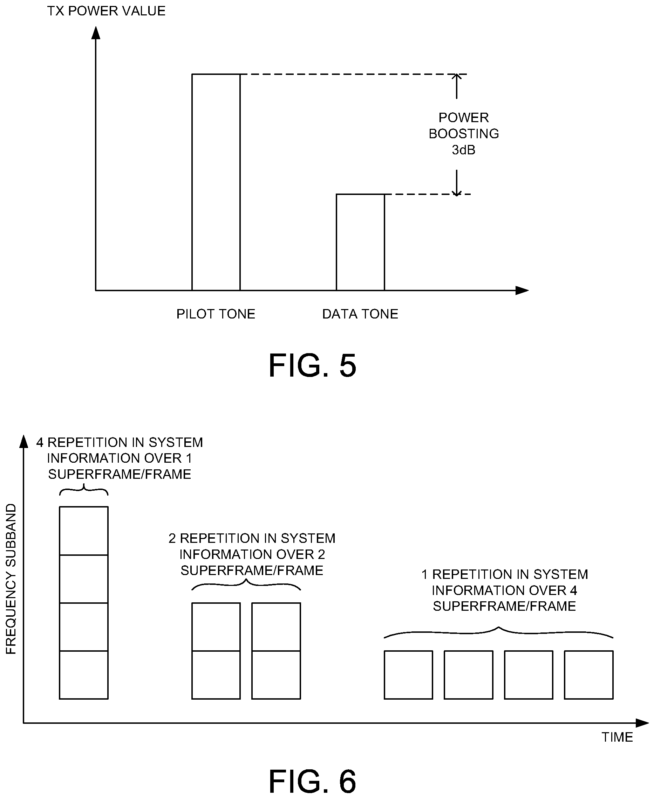

Figure 5 illustrates one example of pilot power boosting for broadcasting system information. In wireless OFDMA systems, higher transmitting power value for pilot tones generally improves the performance of channel estimation. However, power posting for pilot tones would introduce undesirable power fluctuation. To minimize power fluctuation, when the transmit power values for pilot tones are boosted, the transmit power values for data tones are deboosted such that the total transmit power per OFDM symbol per data stream remains the same. As illustrated in Figure 5, the transmitting power value for pilot tones is larger than 3dB above the transmitting power value for data tones. In a first example of interlaced pilot pattern as shown in Figure 3, such pilot power boosting is necessary to improve channel estimation quality. On the other hand, in a second example of null-tone based pilot pattern as shown in Figure 4, pilot power boosting is optional because there is no inter-cell data-to-pilot collision. Nonetheless, power boosting for pilot tones can further improve channel estimation quality.

Figure 6 illustrates different examples of 2D repetition for broadcasting system information. In wireless OFDMA systems, detection reliability of critical system information can be improved if the critical system information is repeated in frequency domain or time domain or both. Under frequency domain repetition, the system information is repeated in multiple frequency subbands by each base station and then broadcasted to mobile stations over a BCH. The mobile stations then use maximum ratio combining (MRC) to detect the transmitted system information by combining from the multiple frequency subbands. MRC is a method of diversity combining in which the signals from each subband are added together, and the gain of each subband is made proportional to the signal level and inversely proportional to the mean square noise level in that subband. Under time domain repetition, the system information is repeated in OFDM symbols of different superframes or frames by each base station and then broadcasted to mobile stations over a BCH. The mobile stations use soft combining to detect the transmitted system information. Soft combining is a method of combining repeated data bursts from different time frames into a single data burst so as to improve decoding performance.

There are different ways to implement the 2D repetition scheme for broadcasting system information. As illustrated in Figure 6, in a first example, system information is repeated four times in frequency domain and one time in time domain. In a second example, system information is repeated two times in frequency domain and two times in time domain. In a third example, system information is repeated one time in frequency domain and four times in time domain. The different 2D repetition patterns need to be communicated to the mobile stations for decoding. In one embodiment, system information is mapped into a first information bit stream and a second information bit stream. The first information bit stream indicates a 2D repetition pattern, while the second information bit stream carriers the actual content of system information. For example, the 2D repetition pattern information can be represented by MCS information. Upon receiving the broadcasted system information, the mobile stations decode the first information bit stream and derive the 2D repetition pattern, and then decode the second information bit stream according to the 2D repetition pattern.

While the above-illustrated schemes relate to broadcasting system information on the transmitter side of base stations to improve channel estimation performance, it is possible to leverage some of the transmitting schemes on the receiver side of mobile stations to facilitate receiver implementation and to improve receiver performance. In conventional receiver implementation, only the pilot pattern of a serving base station is used to estimate channel response and to estimate interference second-order statistics. Such estimation, however, is inaccurate because interference characteristics of pilot tones are different from those of data tones. It is thus impossible to estimate correct second-order statistics of pure interfering data using pilot tones. In one novel aspect, the property of interlaced pilot patterns can be leveraged to estimate interference second-order statistics, which in turn facilitates receiver implementation. In addition, by combining tone nullification, it is possible to obtain more accurate interference second-order statistics and further improve receiver performance.

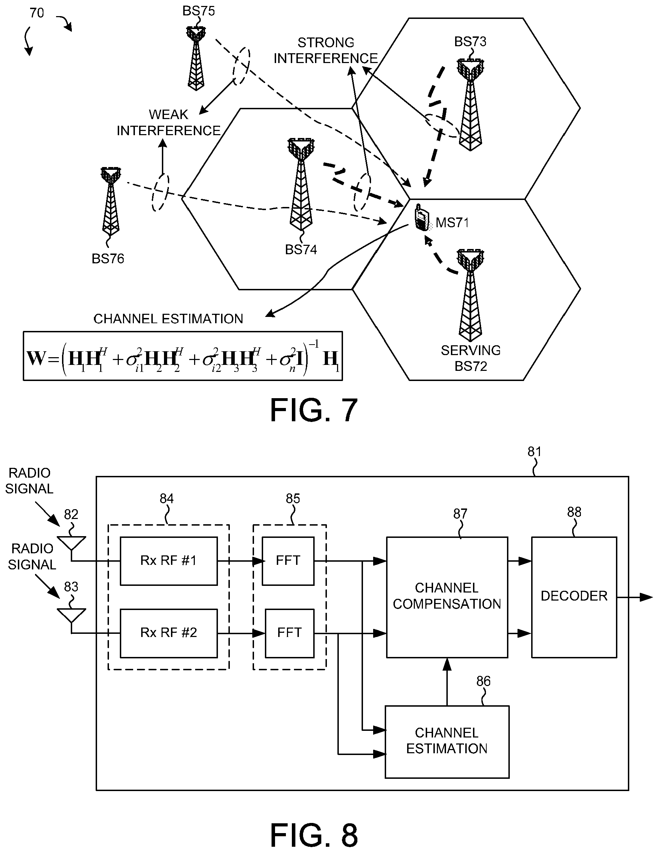

Figure 7 illustrates a wireless OFDMA system 70 in accordance with one novel aspect. Wireless OFDMA system 70 comprises a mobile station MS71, a serving base station BS72, and interfering base stations BS73, BS74, BS75, and BS76. In the example of Figure 7, BS72, BS73 and BS74 are neighboring cells and form a three-cell communication scenario. Interfering BS73 and BS74 are located closer to serving BS72 and transmit stronger interfering radio signals to MS71. On the other hand, BS75 and BS76 are located further to serving BS72 and transmit weaker interfering radio signals to MS71. In one novel aspect, three neighboring base stations BS72-BS74 use three interlaced pilot patterns in transmitting radio signals, and based on the predefined interlaced pilot patterns, MS71 performs channel estimation and channel compensation with improved receiver performance.

Figure 8 illustrates a simplified block diagram of a receiver 81 of a mobile station with interlaced pilot pattern exploitation for channel estimation and compensation. Receiver 81 comprises an Rx radio frequency (RF) module 84 that receives RF signals through antennas 82 and 83, a FFT module 85 that transfers the received RF signals from time domain to frequency domain, a channel estimation module 86, a channel compensation module 87, and a decoder 88. With more details illustrated below, channel estimation module 86 exploits the predefined interlaced pilot patterns to more accurately estimate channel responses, and channel compensation module 87 suppresses interference contributed from interfering cells and detects data from serving cell based on the more accurately estimated channel responses.

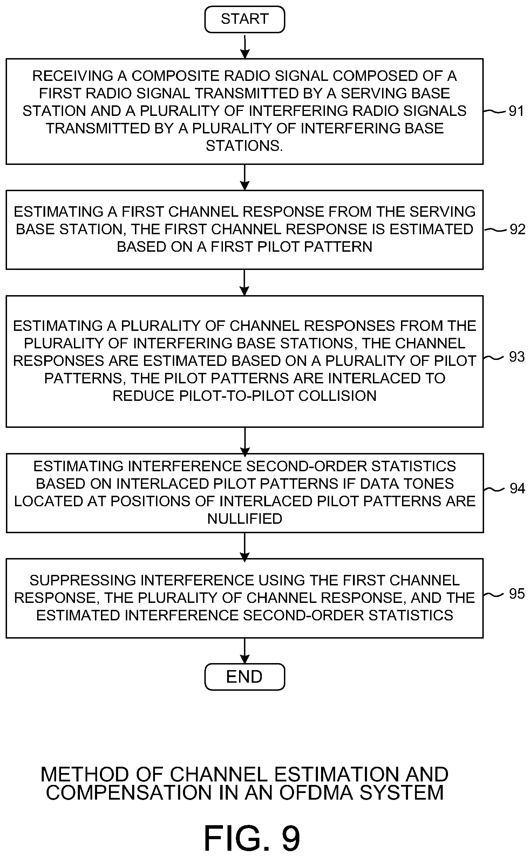

Figure 9 is a flow chart of a method for channel estimation and compensation of a receiver in accordance with a novel aspect. In step 91, a mobile station receives a composite radio signal composed of a first radio signal and a plurality of interfering radio signals. The first radio signal is transmitted by its serving base station over radio resource blocks having a first pilot pattern. The plurality of radio signals are transmitted by a plurality of interfering base stations over radio resource blocks having a plurality of corresponding pilot patterns. The first pilot pattern and the plurality of pilot patterns are predefined and interlaced. The mobile station then estimates a first channel response of the serving BS based on the first pilot pattern (step 92). The mobile station also estimates a plurality of channel responses of the plurality of the interfering BSs based on the plurality of corresponding pilot patterns (step 93).

In a 3-cell communication scenario having one serving base station and two interfering base stations as depicted in Figure 7 (i.e., ignoring weak interfering sources BS75 and BS76), serving BS72 allocates pilot tones with pilot pattern #1, interfering BS73 allocates pilot tones with pilot pattern #2, and interfering BS74 allocates pilot tones with pilot pattern #3. Because the pilot locations for all three interlaced pilot patterns are predefined, MS71 thus estimates a first channel response from serving BS72 using pilot pattern #1, a second channel response from interfering BS73 using pilot pattern #2, and a third channel response from interfering BS74 using pilot pattern #3. In one embodiment, if Maximum Mean Square Error (MMSE) is adopted, then the MMSE weight W for a specific frequency tone is:

$$\mathbf{W} = \left( \mathbf{H}_1 \mathbf{H}_1^{H} + \sigma_{i1}^2 \mathbf{H}_2 \mathbf{H}_2^{H} + \sigma_{i2}^2 \mathbf{H}_3 \mathbf{H}_3^{H} + \sigma_n^2 \mathbf{I} \right)^{-1} \mathbf{H}_1 \qquad (1)$$

where $H_1$ is the channel frequency response of serving BS72, $H_2$ is the channel frequency response of interfering BS73, $H_3$ is the channel frequency response of interfering BS74, $\sigma_n^2$ is the noise power, and I represents an identity matrix. Applying equation (1) with respect to Figure 7, MS71 uses pilot pattern #1 to estimate $H_1$, uses pilot pattern #2 to estimate $\sigma_{i1}H_2$, and uses pilot pattern #3 to estimate $\sigma_{i2}H_3$. By using different pilot patterns to estimate different channel responses from different base stations, the overall performance of channel estimation is improved.

In some wireless OFDMA systems, the number of interfering base stations may be larger than the number of interlaced pilot patterns. In the example of Figure 7, there are four interfering sources BS73-BS76, with BS73-BS74 as the two stronger interfering sources with interlaced pilot patterns, and BS75-BS76 as the two weaker interfering sources without interlaced pilot patterns. Referring back to Figure 9, in order to achieve optimal receiver performance, the mobile station also estimates interference second-order statistics based on the interlaced pilot patterns (step 94). Finally, the mobile station suppresses interference based on the estimated channel response and interference second-order statistics (step 95).

For an MMSE receiver, the optimal MMSE weight W for a specific frequency tone is:

$$\mathbf{W} = \left( \mathbf{H}_1 \mathbf{H}_1^{H} + \sigma_{i1}^2 \mathbf{H}_2 \mathbf{H}_2^{H} + \sigma_{i2}^2 \mathbf{H}_3 \mathbf{H}_3^{H} + \mathbf{R}_{I,1} + \mathbf{R}_{I,2} + \mathbf{R}_{I,3} - \left( \frac{3}{a} - 1 \right) \cdot \sigma_n^2 \mathbf{I} \right)^{-1} \mathbf{H}_1 \qquad (2)$$

where $H_1$ is the channel frequency response of serving BS72, $H_2$ is the channel frequency response of interfering BS73, $H_3$ is the channel frequency response of interfering BS74, $R_{I,K}$ is the second-order statistics of interference estimated by using pilot pattern $K$, $a$ is the power boosting factor, $\sigma_n^2$ is the noise power, and I represents an identity matrix . Applying equation (2) with respect to Figure 7, MS71 uses pilot pattern #1 to estimate H1 and $R_{I,1}$, uses pilot pattern #2 to estimate H2 and $R_{I,2}$, and uses pilot pattern #3 to estimate H3 and $R_{I,3}$.

The estimated interference second-order statistics $R_{I,K}$ represents weak interference contributed from weak interfering sources BS75 and BS76. In order to achieve the optimal MMSE weight W, both interlaced pilot pattern and tone nullification should be applied on the transmitter side by neighboring base stations BS72, BS73 and BS74. This is because with tone nullification, weak interfering radio signals transmitted from BS75 and BS76 can be accurately estimated when there is no data-to-pilot interference from BS73 and BS74. In addition, better channel response can be estimated for H1, H2 and H3 without inter-cell data-to-pilot collision.

On the other hand, in order to achieve a suboptimal MMSE weight W, the weak interference can be treated as white noise. The suboptimal MMSE weight W for a specific frequency tone is:

$$\mathbf{W} = \left( \mathbf{H}_1 \mathbf{H}_1^H + \sigma_{i1}^2 \mathbf{H}_2 \mathbf{H}_2^H + \sigma_{i2}^2 \mathbf{H}_3 \mathbf{H}_3^H + (\sigma_n^2 + \sigma_{i,other}^2)\mathbf{I} \right)^{-1} \mathbf{H}_1 \qquad (3)$$

where $H_1$ is the channel frequency response of serving BS72, $H_2$ is the channel frequency response of interfering BS73, $H_3$ is the channel frequency response of interfering BS74, $\sigma_n^2$ is the while noise, and $\sigma_{i,other}^2$ is the weak interference contributed from interfering cells BS75 and BS76 being represented as white noise.

The broadcasting and receiving techniques described above may be implemented in hardware, software, or a combination thereof. For example, the broadcasting and receiving techniques may be implemented with modules (e.g., procedures, functions, etc.) that perform the procedures and functions. The firmware or software codes may be stored in a memory unit (i.e., storage device 24 or 14 of Figure 1) and executed by a processor (i.e., processor 25 or 14 of Figure 1).

Although the present invention has been described in connection with certain specific embodiments for instructional purposes, the present invention is not limited thereto. For example, the system information broadcasted via a BCH is not necessary the SFH information defined in the IEEE 802.16m specification. Instead, it may include system information defined by wireless systems such as 3GPP LTE. In 3GPP LTE, some of the critical system information includes essential physical layer information of the cell required to receive further system information, information relevant when evaluating if a UE is allowed to access a cell and defined the scheduling of other system information blocks, common and shared channel information, cell re-selection information, etc. In addition, the receiver architecture illustrated in Figures 7-9 is not limited to be a linear MMSE receiver. Instead, it can be any detection system with interference mitigation, suppression, pre-whitening method requires interference second-order statistics. For example, it can be a successive interference suppressor (SIC), a parallel interference suppressor (PIC), and an interference/noise pre-whitener. Accordingly, various modifications, adaptations, and combinations of various features of the described embodiments can be practiced without departing from the scope of the invention as set forth in the claims.

## Claims

1. A method for providing a broadcast channel, BCH, in a cellular OFDMA system, the method comprising:

    mapping (31) system information, including at least one of cell identification information, network entry/reentry information and/or sleep mode operation parameters, onto the BCH by a base station, wherein the BCH comprises one or more two-dimensional resource blocks, each resource block has an array of subcarriers along frequency domain and an array of OFDM symbols along time domain; and
    broadcasting (36) the BCH in the OFDMA system, wherein each resource block comprises a plurality of pilot tones and a plurality of data tones, wherein the system information is mapped onto the plurality of data tones, and wherein the plurality of pilot tones are located in configurable positions such that pilot tones of the same resource blocks transmitted by different base stations in the OFDMA system are interlaced to reduce pilot-to-pilot collision,

    **characterized in that**
    the system information that is being mapped onto the BCH is repeated either in frequency domain or in time domain, wherein the system information is mapped into a first bit stream and a second bit stream, wherein the first bit stream indicates repetition patterns in frequency domain and in time domain of the second bit stream, and the second bit stream carries the actual content of the system information, and
    wherein the plurality of pilot tones is positioned at least in part based on cell identification information of the base station.

2. The method of Claim 1, wherein the plurality of pilot tones is transmitted with a higher power value than the plurality of data tones.

3. The method of Claim 1, wherein data tones of the base station located at positions of pilot tones of other base stations in the OFDMA system are nullified to reduce data-to-pilot collision.

4. The method of Claim 3, wherein the system information is repeated either in frequency domain or in time domain.

5. A base station, comprising:

a transmitter that maps system information, including at least one of cell identification information, network entry/reentry information and/or sleep mode operation parameters, onto a broadcast channel, BCH, in a cellular OFDMA system, wherein the BCH comprises one or more two-dimensional resource blocks, each resource block has an array of subcarriers along frequency domain and an array of OFDM symbols along time domain; and a transmitting antenna that broadcasts the BCH to mobile stations, wherein each resource block comprises a plurality of pilot tones and a plurality of data tones, wherein the system information is mapped onto the plurality of data tones, and wherein the plurality of pilot tones are located in configurable positions such that pilot tones of the same resource blocks transmitted by different base stations in the OFDMA system are interlaced to reduce pilot-to-pilot collision,

**characterized in that**
the system information that is being mapped onto the BCH is repeated either in frequency domain or in time domain, wherein the system information is mapped into a first bit stream and a second bit stream, wherein the first bit stream indicates repetition patterns in frequency domain and in time domain of the second bit stream, and the second bit stream carries the actual content of the system information, and
wherein the plurality of pilot tones is positioned at least in part based on cell identification information of the base station.

6. The base station of Claim 5, wherein the plurality of pilot tones is transmitted with a higher power value than the plurality of data tones.

7. The base station of Claim 5, wherein data tones of the base station located at positions of pilot tones of other base stations in the OFDMA system are nullified to reduce data-to-pilot collision.

8. A method of receiving system information including at least one of cell identification information, network entry/reentry information and/or sleep mode operation parameters, comprising:

(a) estimating (92) a first channel response from a serving base station in a cellular OFDM system, wherein the first channel response is estimated by a mobile station based on a first pilot pattern used by the serving base station;
(b) estimating (93) a plurality of channel responses from a plurality of interfering base stations, wherein the channel responses are estimated by the mobile station based on a plurality of pilot patterns used by the plurality of interfering base stations, and wherein the first pilot pattern and the plurality of pilot patterns are interlaced to reduce pilot-to-pilot collision; and
(c) suppressing (95) interference using the first channel response and the plurality of channel responses,

**characterized in that** the system information which is to be received has been mapped onto a broadcast channel, BCH, in the cellular OFDMA system and has been repeated either in frequency domain or in time domain, wherein the system information which is to be received has been mapped into a first bit stream and a second bit stream, wherein the first bit stream indicates repetition patterns in frequency domain and in time domain of the second bit stream, and the second bit stream carries the actual content of the system information, wherein the interlaced pilot patterns are positioned based on cell identification information of each base station, wherein, under frequency domain repetition, the mobile station uses maximum ratio combining to detect the system information, and
wherein, under time domain repetition, the mobile station uses soft combining to detect the system information.

9. The method of Claim 8, wherein the estimating in (a) and (b) are performed by a linear Minimum Mean Square Error (MMSE) receiver.

10. The method of Claim 8, wherein the mobile station suffers additional weak interfering sources, and wherein the weak interfering sources are treated as white noise.

11. The method of Claim 8, wherein data tones located at all positions of interlaced pilot patterns are nullified to reduce data-to-pilot collision.

12. The method of Claim 11, wherein the mobile station suffers additional weak interfering sources, the method further comprising:

estimating interference second-order statistics from the weak interfering sources based on all interlaced pilot patterns.

13. The method of Claim 12, wherein the suppressing in (c) also uses the estimated interference second-order statistics.

14. A receiver (81) for receiving system information including at least one of cell identification information, network entry/reentry information and/or sleep mode operation parameters, comprising:

a receiving radio frequency, RF, module (84) that receives a composite radio signal composed of a first radio signal with a first pilot pattern transmitted by a serving base station and a plurality of radio signals with a plurality of pilot pattern transmitted by a plurality of interfering base stations, wherein the first pilot pattern and the plurality of pilot patterns are interlaced to reduce pilot-to-pilot collision;
a channel estimation module (86) that estimates a first channel response based on the first pilot pattern, and estimates a plurality of channel responses based on the corresponding plurality of pilot patterns; and
a channel compensation module (87) that suppresses interference using the first channel response and the plurality of channel responses,

**characterized in that**
the system information which is to be received has been mapped onto a broadcast channel, BCH, in the cellular OFDMA system and has been repeated either in frequency domain or in time domain,
wherein the system information which is to be received has been mapped into a first bit stream and a second bit stream, wherein the first bit stream indicates repetition patterns in frequency domain and in time domain of the second bit stream, and the second bit stream carries the actual content of the system information, wherein the interlaced pilot patterns are positioned based on cell identification information of each base station,
wherein, under frequency domain repetition, the receiver uses maximum ratio combining to detect the system information, and
wherein, under time domain repetition, the receiver uses soft combining to detect the system information.

15. The receiver of Claim 14, wherein the receiver is a linear Minimum Mean Square Error (MMSE) receiver.

16. The receiver of Claim 14, wherein the receiver suffers additional weak interfering sources, and wherein the weak interfering sources are treated as white noise.

17. The receiver of Claim 14, wherein data tones located at all positions of interlaced pilot patterns are nullified to reduce data-to-pilot collision.

18. The receiver of Claim 17, wherein the receiver suffers additional weak interfering sources, wherein the channel estimation module also estimates interference second-order statistics from the weak interfering sources based on all interlaced pilot patterns.

19. The receiver of Claim 18, wherein the channel compensation module also uses the estimated interference second-order statistics to suppresses interference.

**Patentansprüche**

1. Verfahren zum Bereitstellen eines Rundsendekanals, d.h. Broadcast Channel, BCH, in einem zellularen OFDMA-System, d.h. Orthogonal-Frequency-Division-Multiple-Access-System, wobei das Verfahren umfasst:

Abbilden (31) von System-Information, die mindestens eine von einer Zellenidentifikations-Information, einer Netzwerk-Eintritts- / Wiedereintritts-Information und / oder einem Schlafmodus-Betriebsparameter enthält, auf den BCH durch eine Basisstation, wobei der BCH jeweils einen oder mehrere zweidimensionale Ressourcenblöcke umfasst, wobei jeder Ressourcenblock ein Array von Subträgern im Frequenzbereich und ein Array von OFDM Symbolen im Zeitbereich aufweist; und

Rundsenden (36) des BCH in dem OFDMA-System, wobei jeder Ressourcenblock eine Vielzahl von Pilottönen und eine Vielzahl von Datentönen umfasst, und wobei die System-Information auf die Vielzahl von Datentönen abgebildet werden, und wobei sich die Vielzahl von Pilottönen an konfigurierbaren Positionen befinden, so dass Pilottöne derselben Ressourcenblöcke, die von verschiedenen Basisstationen im OFDMA-System übertragen werden, verschachtelt werden, um Pilot-zu-Pilot-Kollisionen zu verringern,

**dadurch gekennzeichnet, dass**
die System-Information, die auf den BCH abgebildet wird, entweder im Frequenzbereich oder im Zeitbereich wiederholt wird,

wobei die System-Information in einen ersten Bitstrom und einen zweiten Bitstrom abgebildet wird, wobei der erste Bitstrom Wiederholungsmuster im Frequenzbereich und im Zeitbereich des zweiten Bitstroms anzeigt, und wobei der zweite Bitstrom den gegenwärtigen Inhalt der System-Information trägt, und

wobei die Vielzahl von Pilottönen zumindest teilweise auf der Grundlage von Zellen-Identifikations-Information der Basisstation positioniert wird.

2. Verfahren nach Anspruch 1, wobei die Vielzahl von Pilottönen mit einem höheren Leistungswert als die Vielzahl von Datentönen gesendet wird.

3. Verfahren nach Anspruch 1, wobei Datentöne der Basisstation an den Positionen von Pilottönen von anderen Basisstationen in dem OFDMA-System aufgehoben werden, um Daten-zu-Pilot-Kollisionen zu verringern.

4. Verfahren nach Anspruch 3, wobei die System-Information entweder im Frequenzbereich oder im Zeitbereich wiederholt wird.

5. Basisstation, umfassend:

einen Sender, der System-Information, die mindestens eine von einer Zellenidentifikations-Information, einer Netzwerk-Eintritts- / Wiedereintritts-Information und / oder einem Schlafmodus-Betriebsparameter enthält, auf den BCH in einem zellularen OFDM-System, abbildet, wobei der BCH einen oder mehrere zweidimensionale Ressourcenblöcke umfasst, wobei jeder Ressourcenblock ein Array von Subträgern im Frequenzbereich und ein Array von OFDM Symbolen im Zeitbereich aufweist; und

eine Sendeantenne, die den BCH an Mobilstationen sendet, wobei jeder Ressourcenblock eine Vielzahl von Pilottönen und eine Vielzahl von Datentönen umfasst, wobei die System-Information auf die Vielzahl von Datentönen abgebildet sind, und wobei sich die Vielzahl von Pilottönen an konfigurierbaren Positionen befinden, so dass Pilottöne derselben Ressourcenblöcke, die von verschiedenen Basisstationen im OFDMA-System übertragen sind, verschachtelt sind, um Pilot-zu-Pilot-Kollisionen zu verringern,

**dadurch gekennzeichnet, dass**
die System-Information, die auf den BCH abgebildet ist, sich entweder im Frequenzbereich oder im Zeitbereich wiederholt,

wobei die System-Information in einen ersten Bitstrom und einen zweiten Bitstrom abgebildet ist, wobei der erste Bitstrom Wiederholungsmuster im Frequenzbereich und im Zeitbereich des zweiten Bitstroms anzeigt, und wobei der zweite Bitstrom den gegenwärtigen Inhalt der System-Information trägt, und

wobei die Vielzahl von Pilottönen zumindest teilweise auf der Grundlage von Zellenidentifikations-Information der Basisstation positioniert sind.

6. Basisstation nach Anspruch 5, wobei die Vielzahl von Pilottönen mit einem höheren Leistungswert als die Vielzahl von Datentönen gesendet wird.

7. Basisstation nach Anspruch 5, wobei Datentöne der Basisstation an den Positionen von Pilottönen von anderen Basisstationen in dem OFDMA-System aufgehoben sind, um Daten-zu-Pilot-Kollisionen zu verringern.

8. Verfahren zum Empfangen von System-Information, die mindestens eine von einer Zellenidentifikations-Information, einer Netzwerkeintritts- / Wiedereintrittsinformation und / oder einem Schlafmodus-Betriebsparameter enthält, umfassend:

(a) Schätzen (92) einer ersten Kanalantwort von einer versorgenden Basisstation in einem zellularen OFDM-System, wobei die erste Kanalantwort von einer Mobilstation auf der Grundlage eines ersten Pilotmusters, das von der versorgenden Basisstation verwendet wird, geschätzt wird;

(b) Schätzen (93) einer Vielzahl von Kanalantworten von einer Vielzahl von interferierenden Basisstationen, wobei die Kanalantworten durch die Mobilstation auf der Grundlage einer Vielzahl von Pilotmustern geschätzt werden, die von der Vielzahl von interferierenden Basisstationen verwendet werden, und wobei das erste Pilotmuster und die Vielzahl von Pilotmustern verschachtelt sind, um Pilot-zu-Pilot-Kollisionen zu verringern; und

(c) Unterdrücken (95) von Interferenz durch die Benutzung der ersten Kanalantwort und der Vielzahl von Kanalantworten,

**dadurch gekennzeichnet, dass**
die System-Information, die empfangen werden soll, auf einen Rundsendekanal, BCH, in dem zellularen OFDMA-System abgebildet und entweder im Frequenzbereich oder im Zeitbereich wiederholt worden ist;

wobei die System-Information, die empfangen werden soll, in einen ersten Bitstrom und einen zweiten Bitstrom abgebildet worden ist, wobei der erste Bitstrom Wiederholungsmuster im Frequenzbereich und im Zeitbereich des zweiten Bitstroms anzeigt, und wobei der zweite Bitstrom den gegenwärtigen Inhalt der System-Information trägt, wobei die verschachtelten Pilotmuster auf der Grundlage der Zellenidentifikations-Information von jeder der Basisstationen positioniert werden,

wobei, unter Anwendung der Frequenzbereichs-Wiederholung, die Mobilstation das Maximale Verhältnis-Kombinieren, d.h. Maximum Ratio Combining, verwendet, um die System-Information zu erkennen, und

wobei, unter Anwendung der Zeitbereichs-Wiederholung, die Mobilstation das Weiche Kombinieren, d.h. Soft Combining, verwendet, um die System-Information zu erkennen.

9. Verfahren nach Anspruch 8, wobei das Schätzen in (a) und (b) durch einen linearen MMSE-Empfänger, d.h. Minimum Mean Square Error Receiver, durchgeführt wird.

10. Verfahren nach Anspruch 8, wobei, wenn die Mobilstation unter zusätzlichen schwach-interferierenden Quellen leidet, die schwach interferierenden Quellen als weißes Rauschen behandelt werden.

11. Verfahren nach Anspruch 8, wobei die Datentöne an allen Positionen des verschachtelten Pilotmusters aufgehoben werden, um die Daten-zu-Piloten Kollision zu verringern.

12. Verfahren nach Anspruch 11, wobei, wenn die Mobilstation unter zusätzlichen schwach-interferierenden Quellen leidet, das Verfahren ferner umfasst:

Schätzen einer Interferenzstatistik zweiter Ordnung von den schwach-interferierenden Quellen auf der Grundlage aller verschachtelten Pilotmuster.

13. Verfahren nach Anspruch 12, wobei das Unterdrücken in (c) auch die geschätzte Interferenzstatistik zweiter Ordnung verwendet.

14. Empfänger (81) zum Empfangen von System-Information, die mindestens eine von einer Zellenidentifikations-Information, einer Netzwerk-Eintritts- / Wiedereintritts-Information und / oder einem Schlafmodus-Betriebsparameter enthält, umfassend:

ein Funkfrequenz-RF-Empfangsmodul (84), das ein zusammengesetztes Funksignal empfängt, welches zusammengesetzt ist aus einem ersten Funksignal mit einem ersten Pilotmuster, das von einer versorgenden Basisstation gesendet wird, und einer Vielzahl von Funksignalen mit einer Vielzahl von Pilotmustern, die durch eine Vielzahl von interferierenden Basisstationen übertragen werden, wobei das erste Pilotmuster und die Vielzahl von Pilotmustern verschachtelt, um Pilot-zu-Pilot-Kollisionen zu verringern;

ein Kanalschätzungsmodul (86), das eine erste Kanalantwort auf der Grundlage des ersten Pilotmusters schätzt, und eine Vielzahl von Kanalantworten auf der Grundlage der entsprechenden Vielzahl von Pilotmuster schätzt; und

ein Kanalkompensationsmodul (87), das Interferenzen unter Verwendung der ersten Kanalantwort und der Vielzahl von Kanalantworten unterdrückt,

**dadurch gekennzeichnet, dass**
die System-Information, welche empfangen werden soll, auf einen Rundsendekanal, BCH, in dem zellularen OF-

**EP 2 404 421 B1**

DMA-System abgebildet und entweder im Frequenzbereich oder im Zeitbereich wiederholt worden ist, wobei die System-Information, welche empfangen werden soll, in einen ersten Bitstrom und einen zweiten Bitstrom abgebildet wird, wobei der erste Bitstrom Wiederholungsmuster im Frequenzbereich und im Zeitbereich des zweiten Bitstroms anzeigt, und wobei der zweite Bitstrom den gegenwärtigen Inhalt der System-Information trägt, und wobei die verschachtelten Pilotmuster auf der Grundlage der Zellenidentifizierungs-Information jeder Basisstation positioniert sind,

wobei die verschachtelten Pilotmuster auf der Grundlage der Zellenidentifikations-Information von jeder der Basisstationen positioniert sind,

wobei, unter Anwendung der Frequenzbereichs-Wiederholung, der Empfänger das Maximale Verhältnis-Kombinieren, d.h. Maximum Ratio Combining, verwendet, um die System-Information zu erkennen, und

wobei, unter Anwendung der Zeitbereichs-Wiederholung, der Empfänger ein weiches Kombinieren verwendet, um die System-Information zu erkennen.

15. Empfänger nach Anspruch 14, wobei der Empfänger ein linearer MMSE-Empfänger, d.h. Minimum Mean Square Error Receiver, ist.

16. Empfänger nach Anspruch 14, wobei, wenn der Empfänger unter zusätzlichen schwach-interferierenden Quellen leidet, die schwach-interferierenden Quellen als weißes Rauschen behandelt werden.

17. Empfänger nach Anspruch 14, wobei Datentöne an allen Positionen des verschachtelten Pilotmusters aufgehoben werden, um die Daten-zu-Piloten Kollision zu verringern.

18. Empfänger nach Anspruch 17, wobei, wenn der Empfänger unter zusätzlichen schwach-interferierenden Quellen leidet, das Kanalschätzungsmodul auch eine Interferenzstatistik zweiter Ordnung von den schwach-interferierenden Quellen auf der Grundlage aller verschachtelten Pilotmuster schätzt.

19. Empfänger nach Anspruch 18, wobei das Kanalkompensationsmodul auch die geschätzte Interferenzstatistik zweiter Ordnung verwendet, um Störungen zu unterdrücken.

**Revendications**

1. Un procédé de fourniture d'un canal de diffusion, BCH, dans un système OFDMA cellulaire, le procédé comprenant :

la mise en correspondance (31) par la station sur le BCH d'une information de système, comprenant au moins une information d'identification de cellule, une information d'entrée/réentrée de réseau et/ou des paramètres opératoires de mode de veille, dans lequel le BCH comporte un ou plusieurs blocs de ressources bi-dimensionnels, chaque bloc de ressource ayant une zone de sous-porteuses le long du domaine de fréquence et une zone de symboles OFDM le long du domaine temporel ; et

la diffusion (36) du BCH dans le système OFDMA, dans laquelle chaque bloc de ressources comporte une pluralité de fréquences pilotes et une pluralité de fréquences de données, dans laquelle l'information de système est mise en correspondance sur la pluralité de fréquences de données, et dans laquelle la pluralité de fréquences pilotes sont situation dans des positions configurables de telle façon que les fréquences pilotes des mêmes blocs de ressources transmis par différentes stations de base dans le système OFDMA sont entrelacés réduire la collision pilote à pilote,

**caractérisé en ce que**
l'information de système qui est mise en correspondance sur le BCH est répétée sont dans le domaine fréquentiel ou dans le domaine temporel,

dans lequel l'information système est mise en correspondance en un premier train de bits et un second train de bits, dans lequel le premier train de bit indique les motifs de répétitions dans le domaine fréquentiel et dans le domaine temporel du second train de bits, et le second train de bits porte le contenu réel de l'information système, et dans lequel la pluralité de fréquences pilotes est positionnée au moins partiellement sur de l'information d'identification de la station de base.

2. Le procédé de la revendication 1, dans lequel la pluralité de fréquences pilotes est transmise avec une puissance plus élevée que la pluralité de fréquences de données.

**3.** Le procédé de la revendication 1, dans lequel les fréquences de données de la station de base situées à des positions de fréquences pilotes d'autres stations de base du système OFDMA sont annulées pour réduire la collision données-pilote.

**4.** Le procédé de la revendication 3, dans lequel l'information de système est répétée soit dans le domaine fréquentiel, soit dans le domaine temporel.

**5.** Une station de base comprenant :

un transmetteur qui met en correspondance une information de système, comprenant au moins une information d'identification de cellule, une information d'entrée-réentrée de réseau et /ou des paramètres opératoires en mode veille, sur un canal de diffusion, BCH, dans un système OFDMA cellulaire, dans lequel le BCH comprend un ou plusieurs blocs de ressources bi-dimensionnels, chaque bloc de ressources ayant une zone de sous-porteuses le long du domaine fréquentiel et une zone de symboles OFDM le long du domaine temporel ; et une antenne de transmission qui diffuse le BCH à des stations mobiles, dans laquelle chaque bloc de ressource comporte une pluralité de fréquences pilotes et une pluralité de fréquences de données, dans laquelle l'information de système est mise en correspondance sur la pluralité de fréquences de données, et dans laquelle la pluralité de fréquences pilotes sont situées dans des positions configurables de telles façon que les fréquences pilotes des mêmes blocs de ressources transmis par différentes stations de base dans le système OFDMA sont entrelacés pour réduire la collision pilote à pilote,

**caractérisée en ce que**
l'information système qui est mise en correspondance sur le BCH est répétée soit dans le domaine fréquentiel, soit dans le domaine temporel ;
dans laquelle l'information système est mise en correspondant en un premier train de bits et un second train de bits, dans lequel le premier train de bits indique les motifs de répétitions dans le domaine fréquentiel et dans le domaine temporel du second train de bits, et le second train de bits porte le contenu réel de l'information système, et dans lequel la pluralité de fréquences pilotes est positionnée au moins partiellement sur de l'information d'identification de la station de base.

**6.** La station de base de la revendication 5, dans lequel la pluralité de fréquences pilotes est transmise avec une puissance plus élevée que la pluralité de fréquences de données.

**7.** La station de base de la revendication 5, dans lequel les fréquences de données de la station de base situées à des positions de fréquences pilotes d'autres stations de base du système OFDMA sont annulées pour réduire la collision données-pilote.

**8.** Un procédé de réception d'une information de système comportant au moins une information d'identification de cellule, une information d'entrée-réentrée de réseau et /ou des paramètres opératoires en mode veille, comprenant :

(a) l'estimation (92) d'une première réponse du canal d'une station de base servante dans un système OFDM cellulaire, dans lequel la première réponse de canal est estimée par une station mobile basée sur un premier motif de pilotes utilisé par la station de base servante ;
(b) l'estimation (93) d'une pluralité de réponses de canal d'une pluralité de station de base interférantes, dans laquelle les réponses de canal sont estimées par la station mobile sur la base d'une pluralité de motifs pilotes utilisés par la pluralité de stations de base servantes, et dans laquelle le premier motif pilote et la pluralité de motifs de pilotes sont entrelacées pour réduire la collision pilate-pilote ; et
(c) la suppression (95) de l'interférence en utilisant la première réponse de canal et la pluralité de réponses de canal,

**caractérisé en ce que**
l'information système qui doit être reçue est mise en correspondance sur un canal de diffusion, BCH, dans le système OFDMA cellulaire et doit être répétée soit dans le domaine fréquentiel soit dans le domaine temporel,

dans lequel l'information de système qui doit être reçue est mise en correspondance en un premier train de bits et un second train de bits, dans lequel le premier train de bits indique les motifs de répétitions dans le domaine fréquentiel et dans le domaine temporel du second train de bits, et le second train de bits porte le contenu réel de l'information système, et

dans lequel les motifs de pilotes entrelacés sont positionnés sur la base de l'information d'identification de cellule de chaque station de base,

dans lequel la station mobile utilise, sous répétition dans le domaine fréquentiel, la combinaison de taux maximale pour détecter l'information de système, et

dans lequel la station mobile utilise, sous répétition dans le domaine temporel, la combinaison molle pour détecter l'information de système.

9. Le procédé de la revendication 8, dans lequel les estimations de (a) et (b) sont réalisées au moyen d'un récepteur MMSE.

10. Le procédé de la revendication 8, dans lequel la station mobile souffre de sources d'interférences faibles additionnelles, et dans lequel les sources d'interférence faibles additionnelles sont traitées comme du bruit blanc.

11. Le procédé de la revendication 8, dans lequel les fréquences de données situées à toutes les position des motifs pilotes entrelacées sont annulées pour réduire la collision données-pilotes.

12. Le procédé de la revendication 11, dans lequel la station mobile souffre de sources d'interférences faibles additionnelles, le procédé comprenant en outre :

l'estimation de données statistiques de second-ordre d'interférence émanant des sources d'interférence faibles sur la base de tous les motifs de pilotes entrelacés.

13. Le procédé de la revendication 12, dans lequel la suppression dans (c) utilise également les données statistiques de second-ordre d'interférence

14. Un récepteur (81) pour la réception d'une information de système comportant au moins une information d'identification de cellule, une information d'entrée/réentrée de réseau et/ou des paramètres opératoires de mode veille, comprenant :

un module (84) de réception radio fréquence, RF, qui reçoit un signal radio composite composé d'un premier signal radio avec u premier motif de pilotes transmis par une pluralité de stations de base interférentes, dans lequel le premier motif de pilote et la pluralité de motifs de pilotes sont entrelacées pour réduire la collision pilote-pilote ;

un module d'estimation de canal (86) qui estime une première réponse de canal sur la base du premier motif de pilotes, et qui estime une pluralité de réponses de canal sur la base d'une pluralité correspondante de motifs de pilotes, et

un module de compensation de canal (87) qui supprime l'interférence en utilisant la première réponse de canal et la pluralité de réponses de canal,

**caractérisé en ce que**

l'information système qui doit être reçue est mise en correspondance sur un canal de diffusion, BCH, dans le système OFDMA cellulaire et doit être répétée soit dans le domaine fréquentiel soit dans le domaine temporel,

dans lequel l'information de système qui doit être reçue est mise en correspondance en un premier train de bits et un second train de bits, dans lequel le premier train de bits indique les motifs de répétitions dans le domaine fréquentiel et dans le domaine temporel du second train de bits, et le second train de bits porte le contenu réel de l'information système, et

dans lequel les motifs de pilotes entrelacés sont positionnés sur la base de l'information d'identification de cellule de chaque station de base,

dans lequel le récepteur utilise, sous répétition dans le domaine fréquentiel, la combinaison de taux maximale pour détecter l'information de système, et

dans lequel le récepteur utilise, sous répétition dans le domaine temporel, la combinaison molle pour détecter l'information de système.

15. Le récepteur de la revendication 14, dans lequel récepteur est u récepteur MMSE.

16. Le récepteur de la revendication 14, dans lequel le récepteur souffre de sources d'interférences faibles additionnelles, et dans lequel les sources d'interférence faibles additionnelles sont traitées comme du bruit blanc.

**17.** Le récepteur de la revendication 14, dans lequel les fréquences de données situées à toutes les position des motifs pilotes entrelacés sont annulées pour réduire la collision données-pilotes.

**18.** Le récepteur de la revendication 17, dans lequel le récepteur souffre de sources d'interférences faibles additionnelles, dans lequel le module d'estimation de caal estime également des données statistiques de second-ordre d'interférence émanant des sources d'interférence faibles sur la base de tous les motifs de pilotes entrelacés.

**19.** Le récepteur de la revendication 18, dans lequel le module de compensation de canal utilise également les données statistiques de second-ordre d'interférence.

FIG. 1

START

MAPPING SYSTEM INFORMATION ONTO A BROADCAST CHANNEL, THE SYSTEM INFORMATION IS MAPPED ONTO A PLURALITY OF DATA TONES OF A RESOURCE BLOCK ~ 31

ARRANGING A PLURALITY OF PILOT TONES OF THE RESOURCE BLOCK IN CONFIGURABLE POSITIONS SUCH THAT PILOT TONES OF THE SAME RESOURCE BLOCK TRANSMITTED BY DIFFERENT BASE STATIONS ARE INTERLACED TO REDUCE PILOT-TO-PILOT COLLISION ~ 32

NULLIFYING DATA TONES LOCATED AT POSITIONS OF INTERLACED PILOT TONES OF OTHER BASE STATIONS TO REDUCE DATA-TO-PILOT COLLISION ~ 33

TRANSMITTING THE PLURALITY OF DATA TONES WITH POWER VALUE P1, TRANSMITTING THE PLURALITY OF PILOT TONES WITH POWER VALUE P2, P2 IS LARGER THAN P1 ~ 34

REPEATING SYSTEM INFORMATION IN FREQUENCY DOMAIN OR TIME DOMAIN ~ 35

BROADCASTING THE BCH TO MOBILE STATIONS ~ 36

END

METHOD OF PROVIDING BROADCAST CHANNEL IN AN OFDMA SYSTEM

FIG. 2

TIME (OFDM SYMBOL)

FREQ (TONE)

BS12          BS21          BS22

☐ DATA

▨ PILOT FOR STREAM 1

▨ PILOT FOR STREAM 2

# FIG. 3

TIME (OFDM SYMBOL)

FREQ (TONE)

BS12          BS21          BS22

◉ NULL

☐ DATA

▨ PILOT FOR STREAM 1

▨ PILOT FOR STREAM 2

# FIG. 4

TX POWER VALUE

POWER
BOOSTING
3dB

PILOT TONE          DATA TONE

# FIG. 5

FREQUENCY SUBBAND

4 REPETITION IN SYSTEM
INFORMATION OVER 1
SUPERFRAME/FRAME

2 REPETITION IN SYSTEM
INFORMATION OVER 2
SUPERFRAME/FRAME

1 REPETITION IN SYSTEM
INFORMATION OVER 4
SUPERFRAME/FRAME

TIME

# FIG. 6

STRONG INTERFERENCE

WEAK INTERFERENCE

CHANNEL ESTIMATION

$$\mathbf{W} = \left( \mathbf{H}_1 \mathbf{H}_1^H + \sigma_{i1}^2 \mathbf{H}_2 \mathbf{H}_2^H + \sigma_{i2}^2 \mathbf{H}_3 \mathbf{H}_3^H + \sigma_n^2 \mathbf{I} \right)^{-1} \mathbf{H}_1$$

## FIG. 7

## FIG. 8

START

RECEIVING A COMPOSITE RADIO SIGNAL COMPOSED OF A FIRST RADIO SIGNAL TRANSMITTED BY A SERVING BASE STATION AND A PLURALITY OF INTERFERING RADIO SIGNALS TRANSMITTED BY A PLURALITY OF INTERFERING BASE STATIONS. ⌐~ 91

ESTIMATING A FIRST CHANNEL RESPONSE FROM THE SERVING BASE STATION, THE FIRST CHANNEL RESPONSE IS ESTIMATED BASED ON A FIRST PILOT PATTERN ⌐~ 92

ESTIMATING A PLURALITY OF CHANNEL RESPONSES FROM THE PLURALITY OF INTERFERING BASE STATIONS, THE CHANNEL RESPONSES ARE ESTIMATED BASED ON A PLURALITY OF PILOT PATTERNS, THE PILOT PATTERNS ARE INTERLACED TO REDUCE PILOT-TO-PILOT COLLISION ⌐~ 93

ESTIMATING INTERFERENCE SECOND-ORDER STATISTICS BASED ON INTERLACED PILOT PATTERNS IF DATA TONES LOCATED AT POSITIONS OF INTERLACED PILOT PATTERNS ARE NULLIFIED ⌐~ 94

SUPPRESSING INTERFERENCE USING THE FIRST CHANNEL RESPONSE, THE PLURALITY OF CHANNEL RESPONSE, AND THE ESTIMATED INTERFERENCE SECOND-ORDER STATISTICS ⌐~ 95

END

METHOD OF CHANNEL ESTIMATION AND COMPENSATION IN AN OFDMA SYSTEM

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61156576 A
- US 61172326 A
- WO 2008154768 A
- US 2004233838 A
- US 2002041635 A
- US 2004131007 A
- US 20080008256 A